# EUROPÄISCHE PATENTSCHRIFT

(11) **EP 4 134 249 B1**
(45) Veröffentlichungstag und Bekanntmachung des Hinweises auf die Patenterteilung: **11.09.2024**
(21) Anmeldenummer: 22183467.4
(22) Anmeldetag: 07.07.2022
(51) Int. Cl.: B60C 11/03

(54) **FAHRZEUGLUFTREIFEN**
PNEUMATIC TYRE
PNEUMATIQUE DE VÉHICULE

(30) Priorität: 10.08.2021 DE 102021208709
(43) Veröffentlichungstag der Anmeldung: 15.02.2023
(73) Patentinhaber: Continental Reifen Deutschland GmbH, 30175 Hannover (DE)
(72) Erfinder: Behr, Ulrich, 30165 Hannover (DE)
(74) Vertreter: Continental Corporation

(56) Entgegenhaltungen:
- EP-A1- 2 535 207
- EP-A1- 3 450 213
- EP-A2- 2 732 981
- JP-A- 2009 051 238
- JP-A- 2015 074 347
- US-A1- 2019 351 712
- US-A1- 2021 070 107

## Beschreibung

Die Erfindung betrifft einen Fahrzeugluftreifen mit einem Laufstreifen mit zumindest einer in Umfangsrichtung umlaufenden Profilrippe mit einer an der Laufstreifenperipherie liegende Rippenaußenfläche, wobei in der Profilrippe von der Rippenaußenfläche ausgehende, in Umfangsrichtung voneinander beabstandete, in Draufsicht jeweils die Form eines Langloches oder eines langgestreckten Rechteckes aufweisende Vertiefungen ausgebildet sind, wobei jede Vertiefung in Draufsicht in Umfangsrichtung oder zu dieser unter einem Winkel von bis zu ± 30° verläuft, eine in radialer Richtung ermittelte maximale Tiefe von 80% bis 100% der Profiltiefe und jeweils an der Rippenaußenfläche eine konstante Breite und eine Länge von mindestens 200% der Breite und von höchstens 50,0 mm aufweist.

Ein derartiger Fahrzeugluftreifen ist beispielsweise aus der DE 10 2017 215 188 A1 bekannt. Der Laufstreifen des Reifens weist eine Profilrippe auf, welche mit in Draufsicht gerade sowie in Umfangsrichtung oder zu dieser unter einem Winkel von bis zu ± 30° verlaufenden, in Draufsicht langlochförmigen, geschlossene Vertiefungen versehen ist. Die Vertiefungen weisen eine Breite von 0,4 mm bis 1,2 mm, in radialer Richtung eine Tiefe von mindestens 2,5 mm und höchstens 90% der Profiltiefe sowie eine Länge von 4,0 mm bis 40,0 mm auf und sind in in Umfangsichtung zueinander beabstandeten Gruppen angeordnet, wobei die innerhalb einer Gruppe benachbarten Vertiefungen - bezogen auf ihre Längsschnitt-Symmetrieebenen - voneinander Normalabstände von 3,0 mm bis 12,0 mm aufweisen. Die in Gruppen angeordneten Vertiefungen sollen unter Bedachtnahme auf ein möglichst geringes Abrollgeräusch die Fahr- und Handlingeigenschaften auf nasser Fahrbahn optimieren.

Ein weiterer Fahrzeugluftreifen der eingangs genannten Art ist aus der EP 2 489 527 A1 bekannt. Der Laufstreifen des Reifens weist eine Profilrippe auf, in welcher in Gruppen angeordnete, in Draufsicht gerade sowie in Umfangsrichtung verlaufende, langlochförmige, geschlossene Vertiefungen ausgebildet sind. Die Gruppen befinden sich in Umfangsabschnitten der Profilrippe. Die Vertiefungen weisen eine Länge von 3,0 mm bis 8,0 mm, eine Breite von 0,4 mm bis 1,0 mm und eine Tiefe von 50% bis 100% der Profiltiefe auf. Durch die Vertiefungen soll die Biegesteifigkeit der Profilrippe derart reduziert sein, sodass die Profilrippe beim Abrollen des Reifens die Bodenaufstandsfläche mit reduziertem Widerstand gegen Verbiegung durchläuft, wodurch der Beitrag der Profilrippe zum Rollwiderstand gering sein soll.

Weitere relevante Fahrzeugluftreifen mit Laufstreifen mit Profilpositiven, welche geschlossenen Vertiefungen aufweisen, sind aus EP 2 732 981 A2, US 2019/351712 A1, JP 2009 051238 A, US 2021/070107 A1, JP 2015 074347 A sowie EP 2 535 207 A1 bekannt.

Es ist ferner bekannt, dass Fahrzeugluftreifen mit Laufstreifen mit geringen Profiltiefen, insbesondere mit Profiltiefen von höchstens 7,0 mm, für einen geringen Rollwiderstand vorteilhaft sind, sodass ein gewisser Trend zu Reifen mit geringen Profiltiefen besteht, insbesondere bei Sommerreifen. Mit einer geringen Profiltiefe sollen keine Nachteile bei der Nässeperformance einhergehen. Langlochförmige Vertiefungen sowie breite Umfangsrillen tragen dazu bei, die Nässeperformance auf möglichst hohem Niveau zu halten. Allerdings vermindern langlochförmige Vertiefungen, je nach Ausgestaltung in einem gewissen Ausmaß die Steifigkeit der Profilrippen. Durch breite Umfangsrillen wird das Reifen-Fahrbahn-Geräusch verstärkt und die Breite der Profilrippen reduziert, was ebenfalls für die Steifigkeit der Profilrippen und somit für die Fahreigenschaften auf trockener Fahrbahn ungünstig ist.

Der Erfindung liegt die Aufgabe zugrunde, bei einem Fahrzeugluftreifen der eingangs genannten Art unter Aufrechterhaltung einer optimalen Steifigkeit der Profilrippe die Nässeperformance weiter zu verbessern.

Gelöst wird die gestellte Aufgabe erfindungsgemäß dadurch, dass die Breite der Vertiefung 2,0 mm bis 4,0 mm beträgt, wobei in der Vertiefung ein stufenförmiger Vorsprung ausgebildet ist, welcher einen nutförmigen, radial inneren Vertiefungsabschnitt der Vertiefung umläuft.

Die erfindungsgemäß vorgesehenen Vertiefungen sind daher an der Rippenaußenfläche deutlich breiter als die bekannten Vertiefungen ausgeführt, wodurch die Wasseraufnahme und derart die Entwässerung an der Rippenaußenfläche verbessert ist. Der nutförmige, radial inneren Vertiefungsabschnitt vergrößert dabei ebenfalls die Wasseraufnahmekapazität der Vertiefung. Durch den stufenförmigen Vorsprung werden die an die Vertiefung unmittelbar angrenzenden Profilrippenbereiche wirkungsvoll abgestützt und stabilisiert, wodurch eine für eine gute Trockenperformance vorteilhafte Steifigkeit der Profilrippe erhalten bleiben.

Bevorzugter Weise weist der radial innere Vertiefungsabschnitt in Draufsicht die Gestalt der Vertiefung in verkleinerter Form auf, wodurch die an die Vertiefung unmittelbar angrenzenden Profilrippenbereiche besonders gleichmäßig abgestützt und stabilisiert sind, was für die Trockenperformance besonders günstig.

Gemäß einer bevorzugten Ausführung ist der stufenförmige Vorsprung in radialer Richtung durch eine gegenüber den Rippenaußenfläche abgesetzte Stufenfläche begrenzt, welche, im in Draufsicht senkrecht zu ihrer Erstreckungsrichtung ausgerichteten Querschnitt betrachtet, zumindest abschnittsweise in einer in radialer Richtung ermittelten konstanten Tiefe verläuft, wobei die Stufenfläche an ihrem dem radial inneren Vertiefungsabschnitt abgewandten Ende vorzugsweise eine umlaufende Übergangsrundung mitumfasst. Eine solche Stufenfläche trägt zu einer weiteren Verbesserung der Abstützung der angrenzenden Profilrippenbereiche bei.

Eine Vielzahl bevorzugter Ausführungsvarianten betrifft die weitere Ausgestaltung der Stufenfläche oder steht mit der Stufenfläche im Zusammenhang. Diese nachfolgend genannten Ausführungsvarianten sind beliebig mit der zuvor genannten bevorzugten Ausführung kombinierbar.

Eine erste bevorzugte Ausführungsvariante besteht darin, dass die Tiefe, in welcher die Stufenfläche verläuft, 30% bis 70%, insbesondere 45% bis 55%, der Profiltiefe beträgt. Eine derart ausgebildete Stufenfläche liefert einen vorteilhaften Kompromiss zwischen einer vorteilhaften abstützenden Wirkung des Vorsprunges und einem für die Nässeperformance vorteilhaft großem Leervolumen im Bereich radial außerhalb der Stufenfläche.

Eine zweite bevorzugte Ausführungsvariante ist dadurch gekennzeichnet, dass die Stufenfläche, im in Draufsicht senkrecht zu ihrer Erstreckungsrichtung ausgerichteten Querschnitt betrachtet, eine konstante Breite von 20% bis 40%, insbesondere von 25% bis 35%, der Breite der Vertiefung an der Rippenaußenfläche aufweist, wobei die Breite der Stufenfläche inklusive der etwaig vorgesehenen umlaufenden Übergangsrundung ermittelt ist. Auch diese Maßnahme ist für die abstützende Wirkung des Vorsprunges von zusätzlichem Vorteil.

Eine dritte bevorzugte Ausführungsvariante besteht darin, dass die maximale Tiefe der Vertiefung um 1,5 mm bis 2,5 mm größer ist als die Tiefe, in welcher die Stufenfläche verläuft. Diese Ausführung kennzeichnet daher die Tiefe des nutförmigen, radial inneren Vertiefungsabschnittes und ist für die Wasseraufnahmekapazität der Vertiefung von weiterem Vorteil.

Eine vierte bevorzugte Ausführungsvariante ist dadurch gekennzeichnet, dass der stufenförmige Vorsprung zum radial inneren Vertiefungsabschnitt durch eine zur Stufenfläche verlaufende seitliche Flanke begrenzt ist, welche, im Querschnitt betrachtet, zur radialen Richtung unter einem Winkel von 0° bis 3°, insbesondere von bis zu 1,5°, verläuft. Die Flanke trägt zu einer weiteren Verbesserung der erwähnten abstützenden Wirkung des Vorsprunges auf die Profilrippenbereiche bei.

Eine fünfte bevorzugte Ausführungsvariante ist dadurch gekennzeichnet, dass der radial äußere Vertiefungsabschnitt durch eine von der Rippenaußenfläche ausgehende, zur Stufenfläche des Vorsprunges verlaufende Wandfläche mitbegrenzt ist, welche, im Querschnitt betrachtet, zur radialen Richtung unter einem Winkel von 0° bis 3°, insbesondere von bis zu 1,5°, verläuft. Eine solche Wandfläche ist vor allem für die Wasseraufnahme von Vorteil, da sie - bei gleichbleibender Breite der Vertiefung - gegenüber einer stärker zur radialen Richtung geneigten Wandfläche eine größere Querschnittsfläche der Vertiefung im an den Profilrippenaußenfläche angrenzenden radial äußeren Vertiefungsabschnitt zur Folge hat.

Eine weitere bevorzugte Ausführung ist dadurch gekennzeichnet, dass die Länge der Vertiefungen 10,0 mm bis 40,0 mm, bevorzugt 15,0 mm bis 30,0 mm und/oder dass die Breite der Vertiefungen 2,5 mm bis 3,5 mm beträgt.

Ferner ist es bevorzugt, wenn Vertiefungen vorgesehen sind, welche eine Längsschnitt-Symmetrieebene und eine Querschnitt-Symmetrieebene aufweisen. Solche Vertiefungen zeigen insbesondere gleichmäßige Auswirkungen auf die Steifigkeit der Profilrippe.

Es ist ferner von Vorteil, wenn Vertiefungen vorgesehen sind, welche bezogen auf in Draufsicht in axialer Richtung verlaufende Linien, die durch die in Umfangsrichtung am nächsten zueinander befindlichen Enden der Vertiefungen verlaufen, einen in Umfangsrichtung ermittelten Abstand aufweisen, welcher 20% bis 70%, insbesondere 30% bis 60%, bevorzugt 40% bis 55%, der arithmetisch gemittelten Länge aus den Längen jener beiden Vertiefungen, zwischen welchen der Abstand ermittelt ist, beträgt.

Außerdem ist es günstig, wenn Vertiefungen vorgesehen sind, welche, in Draufsicht betrachtet, in Umfangsrichtung verlaufen sowie vorzugsweise miteinander fluchtend verlaufend in in Umfangsrichtung umlaufenden Reihen angeordnet sind, wobei bevorzugter Weise in der Profilrippe zumindest zwei Reihen von Vertiefungen vorgesehen sind.

Gemäß einer weiteren bevorzugten Ausführung ist die Profilrippe mit über ihren Umfang verteilten Einschnitten und/oder Rillen versehen, welche der Profilrippe Profilblöcke verleihen, in welchen jeweils zumindest eine Vertiefung ausgebildet ist. Dies ermöglicht eine weiter verbesserte und besonders gleichmäßige Entwässerung der Profilrippe.

Eine weitere bevorzugte Ausführung ist dadurch gekennzeichnet, dass in der Profilrippe von der Rippenaußenfläche ausgehende, in Umfangsrichtung voneinander beabstandete, in Draufsicht jeweils die Form eines Langloches oder eines langgestreckten Rechteckes aufweisende, geschlossene, weitere Vertiefungen ausgebildet sind, welche, in Draufsicht betrachtet, zu den Vertiefungen mit den stufenförmigen Vorsprüngen parallel verlaufen, jeweils eine Breite von 2,0 mm bis 4,0 mm, insbesondere von 2,5 mm bis 3,5 mm, und eine Länge von zumindest 200% ihrer Breite und höchstens 50,0 mm, insbesondere von 10,0 mm bis 40,0 mm, besonders bevorzugt von 15,0 mm bis 30,0mm, aufweisen, wobei die Breite der weiteren Vertiefungen insbesondere um 0,5 mm bis 1,0 mm geringer ist als die Breite der Vertiefungen mit den stufenförmigen Vorsprüngen. Die weiteren Vertiefungen sind im Hinblick auf die Nässeperformance eine vorteilhafte Ergänzung.

Weitere Merkmale, Vorteile und Einzelheiten der Erfindung werden nun anhand der Zeichnung, die schematisch Ausführungsbeispiele der Erfindung zeigt, näher beschrieben. Dabei zeigen
Fig. 1 eine Draufsicht auf einen Umfangsabschnitt einer in die Ebene abgewickelten Profilrippe eines Laufstreifens eines Fahrzeugluftreifens mit einer ersten Ausführungsvariante der Erfindung,
Fig. 2 eine vergrößerte Draufsicht auf das Detail Z₂ der Fig. 1,
Fig. 3 eine weiter vergrößerte Draufsicht auf das Detail Z₃ der Fig. 1,
Fig. 4 einen Schnitt entlang der Linie IV-IV der Fig. 3 und
Fig. 5 eine Draufsicht auf eine Hälfte eines in die Ebene abgewickelten Laufstreifens eines Fahrzeugluftreifens mit einer zweiten Ausführungsvariante der Erfindung.

Gemäß der Erfindung ausgeführte Fahrzeugluftreifen sind Reifen für mehrspurige Kraftfahrzeuge sowie vorzugsweise Reifen in Radialbauart für Personenkraftwagen, Vans oder Light-Trucks (Leichte LKWs mit zGM ≤ 7,5 t).

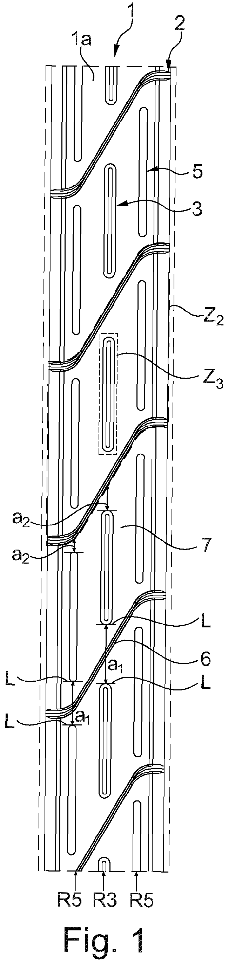

Fig. 1 zeigt einen Umfangsabschnitt einer zu einem Laufstreifen eines Fahrzeugluftreifens gehörenden mittleren Profilrippe 1, welche seitlich durch je eine in Draufsicht gerade verlaufende, in Fig. 1 angedeutete Umfangsrille 2 zu weiteren, beispielsweise in bekannter Weise ausgeführten Laufstreifenbereichen begrenzt ist.

Die Umfangsrillen 2 sind in radialer Richtung auf die jeweils vorgesehene Profiltiefe ausgeführt, welche für den bevorzugten Reifentyp üblicherweise 4,0 mm bis 11,0 mm, insbesondere höchstens 5,5 mm, besonders bevorzugt höchstens 5,0 mm, beträgt. Der Ausdruck "Profiltiefe" bezeichnet bei Laufstreifen mit verschieden tief ausgeführten Umfangsrillen die Tiefe der am tiefsten ausgeführten Umfangsrille(n).

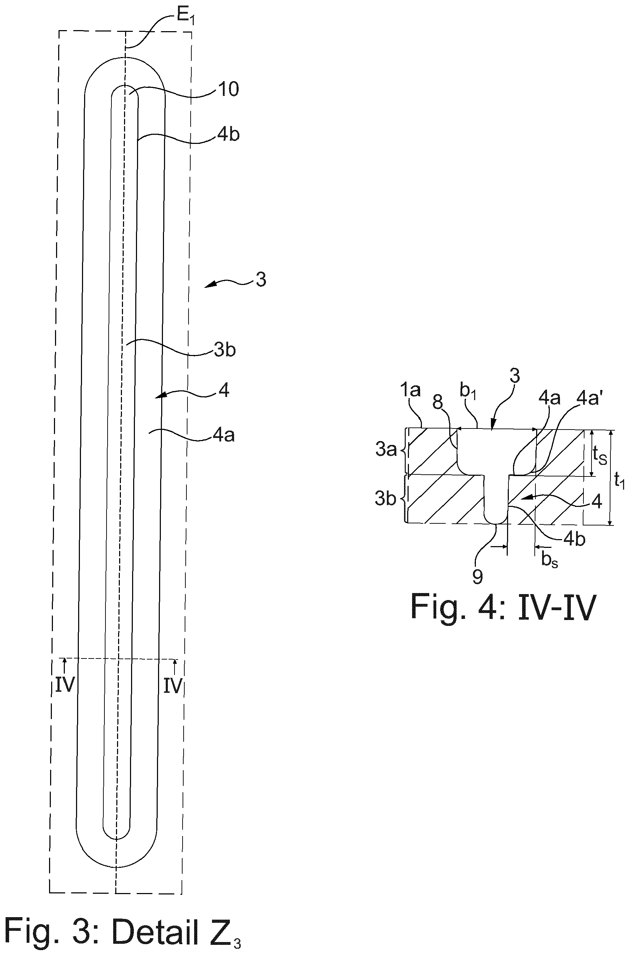

Die Profilrippe 1 weist eine in der Laufstreifenperipherie liegende Rippenaußenfläche 1a auf und ist mit von der Rippenaußenfläche 1a ausgehenden, in Draufsicht langlochförmigen, geschlossenen Vertiefungen 3, in welchen jeweils eine umlaufender stufenförmiger Vorsprung 4 (Fig.3, Fig. 4) ausgebildet ist, sowie mit von der Rippenaußenfläche 1a ausgehenden, in Draufsicht langlochförmigen, geschlossenen Vertiefungen 5 versehen. Unter einer "geschlossenen Vertiefung" wird dabei eine solche verstanden, welche weder in die Umfangsrillen 2 noch in innerhalb der Profilrippe 1 ausgebildete Profilnegative einmündet. Zu den innerhalb der Profilrippe 1 ausgebildeten Profilnegativen gehört beim Ausführungsbeispiel, neben den Vertiefungen 3, 5, eine Vielzahl von einschnittartigen Schrägrillen 6.

Die Schrägrillen 6 münden jeweils in beide Umfangsrillen 2 ein, verlaufen in Draufsicht parallel zueinander sowie jeweils leicht S-förmig geschwungen, ferner über den Großteil ihrer Erstreckung gerade und unter einem spitzen Winkel zur axialen Richtung und weisen im Wesentlichen in axialer Richtung verlaufende Rillenendabschnitte auf. Die Schrägrillen 6 verleihen der Profilrippe 1 in Draufsicht im Wesentlichen parallelogrammförmige mittlere Profilblöcke 7.

Die Vertiefungen 3, 5 verlaufen in Draufsicht in Umfangsrichtung, wobei die Vertiefungen 3 in einer mittig in der Profilrippe 1 in Umfangsrichtung umlaufenden zentralen Reihe R3 und die Vertiefungen 5 in zwei in Umfangsrichtung umlaufenden seitlichen Reihen R5 angeordnet sind. Innerhalb der Reihen R3, R5 verlaufen die Vertiefungen 3, 5 in Draufsicht fluchtend miteinander, also in Fortsetzung zueinander, wobei beim Ausführungsbeispiel jede Reihe R3, R5 in jedem mittleren Profilblock 7 eine einzige Vertiefung 3, 5 umfasst. Ferner sind die Vertiefungen 5 aus der einen seitlichen Reihe R5 gegenüber den Vertiefungen 3 aus der zentralen Reihe R3 in die eine Umfangsrichtung versetzt und die Vertiefungen 5 aus der anderen seitlichen Reihe R5 sind gegenüber den Vertiefungen 3 aus der zentralen Reihen R3 in die andere Umfangsrichtung versetzt.

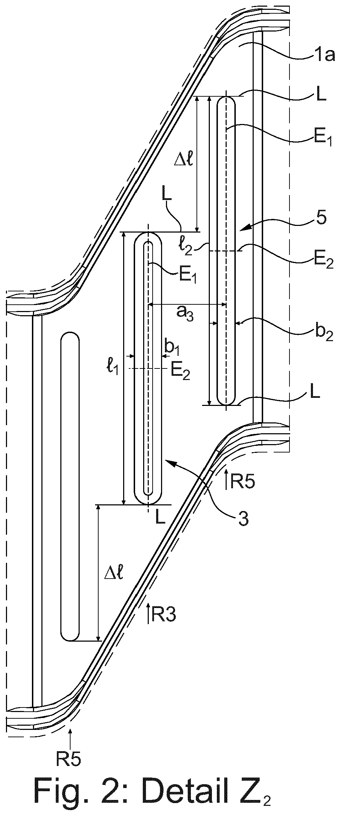

Gemäß Fig. 2 weisen die Vertiefungen 3, 5 jeweils eine von der radialen Richtung und der Umfangsrichtung aufgespannte, in Längserstreckung durch die Mitte der Vertiefung 3, 5 verlaufende Längsschnitt-Symmetrieebene E₁ und eine von der radialen Richtung und der axialen Richtung aufgespannte, daher orthogonal zur Längsschnitt-Symmetrieebene E₁ verlaufende, bezogen auf die Längserstreckung durch die Mitte der jeweiligen Vertiefung 3, 5 verlaufende Querschnitt-Symmetrieebene E₂ auf. In Fig. 2 sind bei der Vertiefung 3 und bei der einen Vertiefung 5 jeweils zwei Linien L eingezeichnet, welche in axialer Richtung durch die voneinander in Umfangsrichtung am weitetesten voneinander entfernten Enden der Vertiefung 3 bzw. 5 verlaufen.

Die Vertiefungen 3, 5 weisen - jeweils ermittelt an der Rippenaußenfläche 1a - eine in Umfangsrichtung zwischen den Linien L ermittelte Länge l₁ (Vertiefung 3), l₂ (Vertiefung 5) und eine im Bereich außerhalb der endseitigen Halbkreise ihres Langloches in axialer Richtung ermittelte konstante Breite b₁ (Vertiefung 3), b₂ (Vertiefung 5) auf. Die Breiten b₁, b₂ betragen jeweils 2,0 mm bis 4,0 mm, insbesondere 2,5 mm bis 3,5 mm, wobei Breite b₂ vorzugsweise 0,5 mm bis 1,0 mm geringer ist als die Breite b₁. Die Längen l₁, l₂ betragen jeweils zumindest 200% der zugehörigen Breite b₁ (Länge l₁), b₂ (Länge l₂) und höchstens 50,0 mm, insbesondere 10,0 mm bis 40,0 mm, bevorzugt 15,0 mm bis 30,0 mm, wobei die Länge l₂ von der Länge l₁ vorzugsweise um höchstens 5,0 mm abweicht. Die Vertiefungen 3, 5 sind derart in Umfangsrichtung stufenweise zueinander versetzt, dass die Vertiefung 5 aus der einen Reihe R5 die Vertiefung 3 an ihrem einen Ende überragt und die Vertiefung 5 aus der anderen Reihe R5 die Vertiefung 3 an ihrem zweiten Ende überragt, wobei das jeweils andere, zweite Ende der jeweiligen Vertiefung 5 axial neben der Vertiefung 3 liegt. Die Vertiefungen 5 überragen das jeweilige Ende der Vertiefung 3 mit einem auf die Linien L bezogenen, in Umfangsrichtung ermittelten Überstand ΔI von insbesondere 1,0 mm bis 5,0 mm. Bevorzugter Weise beträgt der Überstand ΔI 10% bis 50%, insbesondere 20% bis 40%, der aus den Längen l₁, l₂ der jeweiligen Vertiefungen 3, 5 errechneten arithmetisch gemittelten Länge (arithmetischer Mittelwert aus den Längen l₁, l₂). Ferner ist es bevorzugt, wenn die Längen l₁, l₂ und die Überstände ΔI derart aufeinander abgestimmt sind, dass die Querschnitt-Symmetrieebenen E₂ der Vertiefungen 5 im Bereich der Vertiefungen 5 axial seitlich neben der Vertiefung 3 verlaufen, sodass die Querschnitt-Symmetrieebenen E₂ der Vertiefungen 5 die Vertiefung 3 schneiden.

Die Vertiefungen 3, 5, welche sich in zueinander benachbarten Reihen R3, R5 befinden, weisen - bezogen auf die Längsschnitt-Symmetrieebenen E₁ - voneinander Normalabstände a₃ von 2,0 mm bis 6,0 mm auf. Wie Fig. 1 zeigt, weisen innerhalb der Reihen R3 bzw. R5 unmittelbar aufeinanderfolgende Vertiefungen 3, 5 - bezogen auf die Linien L - gegenseitige in Umfangsrichtung ermittelte Abstände a₁ auf, welche auf die arithmetisch gemittelte Länge jener beiden Vertiefungen 3 bzw. 5 abgestimmt sind, zwischen welchen der jeweilige Abstand a₁ ermittelt ist. Die zwischen den Vertiefungen 3 vorliegenden Abstände a₁ betragen jeweils 20% bis 70%, insbesondere 30% bis 60%, bevorzugt 40% bis 55%, der arithmetisch gemittelten Länge, welche aus den Längen l₁ jener beiden Vertiefungen 3 errechnet ist, zwischen welchen der Abstand a₁ ermittelt ist. In analoger Weise betragen die zwischen den Vertiefungen 5 vorliegenden Abstände a₁ jeweils 20% bis 70%, insbesondere 30% bis 60%, bevorzugt 40% bis 55%, der arithmetisch gemittelten Länge, welche aus den Längen l₂ jener beiden Vertiefungen 5 errechnet ist, zwischen welchen der Abstand a₁ ermittelt ist. Bevorzugter Weise sind die Abstände a₁ derart gewählt, dass die Vertiefungen 3, 5 - bezogen auf die Linien L - zur jeweils nächstliegenden Schrägrille 6 einen in Umfangsrichtung ermittelten Abstand a₂ von zumindest 1,0 mm aufweisen.

Die Vertiefungen 5 weisen ferner in radialer Richtung eine konstante Tiefe von 50% bis 100%, bevorzugt von 80% bis 95%, der Profiltiefe auf.

Die weitere Ausgestaltung der Vertiefungen 3 wird nachfolgend anhand einer einzelnen Vertiefung 3 weiter erläutert.

Wie Fig. 3 und Fig. 4 in Kombination zeigen, ist in der Vertiefung 3 der bereits erwähnte stufenförmige Vorsprung 4 ausgebildet, welcher die Vertiefung 3 in ihrem Inneren umläuft und dieser einen radial äußeren Vertiefungsabschnitt 3a (Fig. 4) und einen in Draufsicht (Fig. 3) die Gestalt der Vertiefung 3 in verkleinerter Form aufweisenden, nutförmigen, radial inneren Vertiefungsabschnitt 3b verleiht. Die Vertiefung 3 weist im Bereich des radial inneren Vertiefungsabschnittes 3b eine gegenüber dem Niveau der Rippenaußenfläche 1a in radialer Richtung ermittelte maximale Tiefe t₁ (Fig. 4) von 80% bis 100% der Profiltiefe auf.

Gemäß Fig. 4 ist der stufenförmige Vorsprung 4 in radialer Richtung zum radial äußeren Vertiefungsabschnitt 3a, durch eine gegenüber der Rippenaußenfläche 1a in radialer Richtung abgesetzte umlaufende Stufenfläche 4a (vergl. Fig. 3), deren Ausgestaltung noch erläutert wird, und seitlich zum radial inneren Vertiefungsabschnitt 3b durch eine umlaufende, seitliche Flanke 4b begrenzt.

Die Flanke 4b verläuft, im Querschnitt senkrecht zur Längsschnitt-Symmetrieebene E₁ betrachtet, zur radialen Richtung unter einem Winkel von 0° bis 3°, insbesondere von bis zu 1,5°, wobei die Flanke 4b im Bereich der endseitigen Halbkreise des Langloches, im in Draufsicht senkrecht zur Flanke 4b ausgerichteten Querschnitt betrachtet, unter Beibehaltung dieses Winkels verläuft.

Der radial äußeren Vertiefungsabschnitt 3a ist durch die Stufenfläche 4a des Vorsprunges 4, welche den Boden des Vertiefungsabschnittes 3a bildet, und eine von der Rippenaußenfläche 1a ausgehende, umlaufende Wandfläche 8 begrenzt. Die Wandfläche 8 verläuft, im Querschnitt senkrecht zur Längsschnitt-Symmetrieebene E₁ betrachtet, zur radialen Richtung unter einem Winkel von 0° bis 3°, insbesondere von bis zu 1,5°, wobei die Wandfläche 8 im Bereich der endseitigen Halbkreise des Langloches, im in Draufsicht senkrecht zur Wandfläche 8 ausgerichteten Querschnitt betrachtet, unter Beibehaltung dieses Winkels verläuft.

Der radial innere Vertiefungsabschnitt 3b ist durch die umlaufende, seitliche Flanke 4b des Vorsprunges 4 und einen im Querschnitt senkrecht zur Längsschnitt-Symmetrieebene E₁ U-förmig verlaufenden Boden 9 grenzt. Der Boden 9 verläuftbezogen auf seine tiefste Stelle - in der erwähnten maximalen Tiefe t₁ und geht beim Ausführungsbeispiel an seinen Längsenden über Übergangsrundungen 10 (Fig. 3) in die umlaufende, seitliche Flanke 4b des Vorsprunges 4 über.

Die Stufenfläche 4a verläuft, im in Draufsicht senkrecht zu Längsschnitt-Symmetrieebene E₁ ausgerichteten Querschnitt betrachtet (vergl. Lage der Linie IV-IV in Fig. 3), ausgehend vom radial inneren Vertiefungsabschnitt 3b zumindest über den Großteil ihrer Erstreckung in einer in radialer Richtung ermittelten konstanten Tiefe ts von 30% bis 70%, insbesondere von 45% bis 55%, der Profiltiefe und weist eine zur Wandfläche 8 verlaufende, im Querschnitt kreisbogenförmige, umlaufende Übergangsrundung 4a' auf. Die Übergangsrundung 4a' ist optional, sodass die Stufenfläche 4a direkt an die Wandfläche 8 anschließen kann. Die Stufenfläche 4a weist, im in Draufsicht senkrecht zu ihrer Erstreckungsrichtung ausgerichteten, in radialer Richtung verlaufenden Querschnitt betrachtet, beim Ausführungsbeispiel daher ferner im senkrecht zur Längsschnitt-Symmetrieebene E₁ verlaufenden Querschnitt betrachtet, eine in der Tiefe ts ermittelte konstante Breite b_{S} von 20% bis 40%, insbesondere von 25% bis 35%, der bereits erwähnten Breite b₁ der Vertiefung 3 auf, wobei die Breite b_{S} inklusive der etwaig vorgesehenen Übergangrundung 4a' ermittelt ist.

Bevorzugter Weise sind die maximale Tiefe t₁ der Vertiefung 3 und die Tiefe ts der Stufenfläche 4a derart aufeinander abgestimmt, dass die Tiefe t₁ der Vertiefung 3 um 1,5 mm bis 2,5 mm größer als die Tiefe ts der Stufenfläche 4a.

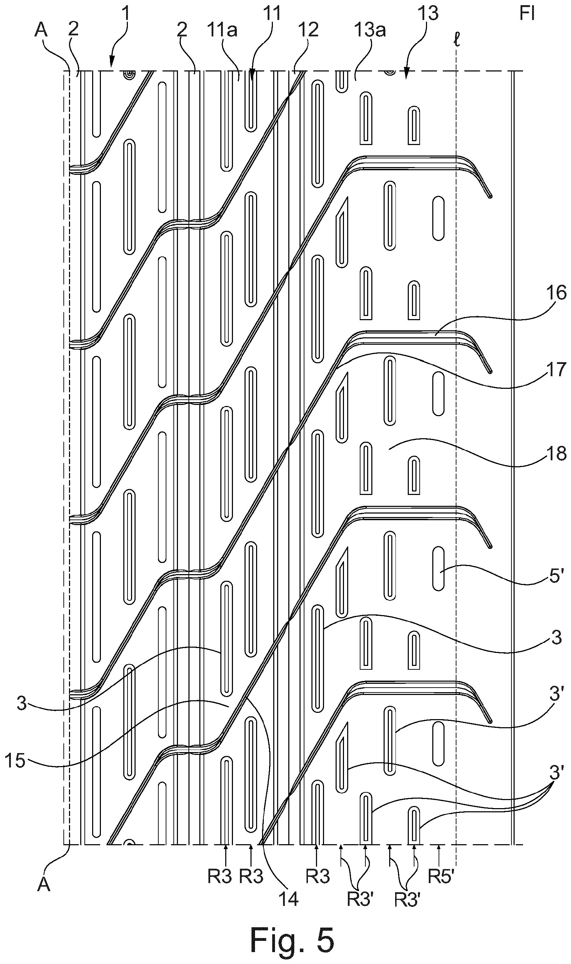

Fig. 5 zeigt eine Draufsicht auf eine Hälfte eines in die Ebene abgewickelten Laufstreifens gemäß einer zweiten Ausführungsvariante der Erfindung. Die Reifenäquatorialebene ist durch eine Linie A-A angedeutet. Der seitliche Rand der Bodenaufstandsfläche (entspricht dem statisch ermittelten Footprint bei einer Last von 70 % der maximalen Tragfähigkeit bei einem Innendruck von 85 %, ermittelt gemäß E.T.R.T.O.-Standards) ist durch eine Linie l gekennzeichnet.

Der Laufstreifen weist in der gezeigten Hälfte eine seitlich der Reifenäquatorialebene (Linie A-A) ausgebildete, durch Umfangrillen 2 begrenzte mittlere Profilrippe 1 gemäß dem ersten Ausführungsbeispiel auf. Benachbart zur mittlere Profilrippe 1 verläuft eine mittlere Profilrippe 11, welche durch eine vorzugsweise auf Profiltiefe ausgeführte, schulterseitige Umfangsrille 12 von einer schulterseitigen Profilrippe 13 getrennt ist.

Die mittlere Profilrippe 11 weist eine in der Laufstreifenperipherie liegende Rippenaußenfläche 11a auf und ist mit von der Rippenaußenfläche 11a ausgehenden, in Draufsicht langlochförmigen, geschlossenen, gemäß der ersten Ausführungsvariante (Fig. 1, Fig. 2) ausgeführten geschlossenen Vertiefungen 3 versehen, welche in zwei in Umfangsrichtung umlaufenden Reihen R3 angeordnet sind, wobei die Vertiefungen 3 aus der einen Reihe R3 gegenüber den Vertiefungen 3 aus der anderen Reihe R3 in Umfangsrichtung versetzt sind. Ferner sind in der mittleren Profilrippe 11 in Draufsicht parallel zueinander verlaufende, einschnittartige Schrägrillen 14 ausgebildet, welche der Profilrippe 11 in Draufsicht parallelogrammförmige mittlere Profilblöcke 15 verleihen, wobei in jedem mittleren Profilblock 15 eine Vertiefung 3 aus jeder Reihe R3 verläuft.

Die schulterseitige Profilrippe 13 weist eine in der Laufstreifenperipherie liegende Rippenaußenfläche 13a auf und ist innerhalb der Bodenaufstandsfläche mit von der Rippenaußenfläche 13a ausgehenden, in Draufsicht langlochförmigen, geschlossenen Vertiefungen 3 gemäß der ersten Ausführungsvariante versehen, welche in einer zur schulterseitigen Umfangsrillen 12 unmittelbar benachbarten Reihe R3 verlaufen. Ferner ist die schulterseitige Profilrippe 13 innerhalb der Bodenaufstandsfläche mit geschlossen Vertiefungen 3' versehen, welche analog zu den Vertiefung 3 einen radial äußeren Vertiefungsabschnitt und einen radial inneren Vertiefungsabschnitt aufweisen, gegenüber den Vertiefungen 3 kürzer ausgeführt sind, gegebenenfalls in Draufsicht abgeschrägte Enden aufweisen und in vier Reihen R3' verlaufen, wobei Vertiefungen 3' aus unmittelbar zueinander benachbarten Reihen R3' in Umfangsrichtung versetzt sind. Darüber hinaus ist die Profilrippe 13 innerhalb der Bodenaufstandsfläche unmittelbar benachbart zum seitlichen Rand der Bodenaufstandsfläche (Linie l) mit geschlossenen Vertiefungen 5' versehen, welche in einer Reihe R5' verlaufen.

Beim gezeigten Ausführungsbeispiel ist die schulterseitige Profilrippe 13 mit einer Vielzahl von in Draufsicht parallel zueinander verlaufenden, über ihre Umfangserstreckung verteilen, in Draufsicht in axialer Richtung verlaufenden und über den seitlichen Rand der Bodenaufstandsfläche (Linie l) hinausreichenden Querrillen 16 versehen, an welche laufstreifeninnenseitig jeweils eine mit der jeweiligen Querrille 16 einen stumpfen Winkel einschließende, zur schulterseitigen Umfangsrille 12 verlaufende, einschnittartige Schrägrille 17 anschließt. Die Querrillen 16 und Schrägrillen 17 verleihen der Profilrippe 13 schulterseitige Profilblöcke 18, wobei beim Ausführungsbeispiel die in der schulterseitigen Profilrippe 13 vorgesehenen Reihen R3, R3', R5' in jedem schulterseitigen Profilblock 18 eine einzige Vertiefung 3, 3`, 5 aufweisen.

Bevorzugter Weise sind die Vertiefungen 3, 3' ausschließlich in der einen Hälfte des Laufstreifens vorgesehen, sodass der Laufstreifen bezüglich der Reifenäquatorialebene (Linie A-A) eine asymmetrische Gestalt aufweist, wobei der Fahrzeugluftreifen bevorzugt derart an einem Fahrzeug, etwa einem PKW, zu montieren ist, dass die die Profilrippen 1, 11, 13 aufweisende Laufstreifenhälfte der Fahrzeuginnenseite (angedeutet durch die Buchstaben "FI") zugewandt ist. In der zweiten Laufstreifenhälfte ist insbesondere eine Vielzahl von Vertiefungen 3, 3' vorgesehen.

Bevorzugter Weise nehmen die am Laufstreifen ausgebildeten Profilnegative, zu welchem in den Ausführungsbeispielen die Vertiefungen 3, 3', 5, 5', die Umfangsrillen 2, 12, die Schrägrille 6, 14, 17 und die Querrillen 16 gehören, gemeinsam innerhalb der jeweiligen Bodenaufstandsfläche (statisch ermittelter Footprint gemäß E.T.R.T.O-Standards) einen Flächenanteil von 25% bis 35% des Flächeninhaltes der Bodenaufstandsfläche ein. Dabei werden sowohl sämtliche komplett innerhalb der jeweiligen Bodenaufstandsfläche befindliche Profilnegative als auch etwaige innerhalb der jeweiligen Bodenaufstandsfläche befindliche Teilbereiche von teilweise innerhalb und teilweise außerhalb der Bodenaufstandsfläche befindliche Profilnegative berücksichtigt. Der erwähnte von den Profilnegativen eingenommene Flächenanteil ist zumindest von 50% von den Vertiefungen 3, 3', 5, 5' eingenommen.

Die Erfindung ist auf die beschriebenen Ausführungsbeispiele nicht beschränkt.

Insbesondere können zumindest einzelne, in Draufsicht langgestreckt rechteckig ausgeführte, geschlossene Vertiefungen vorgesehen sein. Ferner können die geschlossenen Vertiefungen zur Umfangsrichtung unter einem Winkel von bis zu ± 30° verlaufen. Die erwähnten Längen der Vertiefungen sind jeweils in Längserstreckung der Vertiefungen ermittelt. Die Vertiefungen 5, 5' sind optional. Der Laufstreifen weist zumindest eine Profilrippe auf, in welcher die Vertiefungen mit jeweils einem stufenförmigen Vorsprung ausgebildet sind.

### Bezugszeichenliste

- 1: mittlere Profilrippe
- 1a: Rippenaußenfläche
- 2: Umfangsrille
- 3, 3': Vertiefung
- 3a: radial äußerer Vertiefungsabschnitt
- 3b: radial innerer Vertiefungsabschnitt
- 4: stufenförmiger Vorsprung
- 4a: Stufenfläche
- 4a': Übergangsrundung
- 4b: seitliche Flanke
- 5, 5': Vertiefung
- 6: Schrägrille
- 7: mittlerer Profilblock
- 8: Wandfläche
- 9: Boden
- 10: Übergangrundung
- 11: mittlere Profilrippe
- 11a: Rippenaußenfläche
- 12: schulterseitige Umfangrille
- 13: schulterseitige Profilrippe
- 13a: Rippenaußenfläche
- 14: Schrägrille
- 15: mittlerer Profilblock
- 1: Querrille
- 17: Schrägrille
- 18: schulterseitiger Profilblock
- A-A: Linie (Reifenäquatorialebene)
- a₁, a₂: Abstand
- a₃: Normalabstand
- b₁, b₂, b_{S}: Breite
- E₁: Längsschnitt-Symmetrieebene
- E₂: Querschnitt-Symmetrieebene
- FI: Fahrzeuginnenseite
- I: Linie (seitlicher Rand der Bodenaufstandsfläche)
- L: Linie
- l₁, l₂: Länge
- ΔI: Überstand
- R3, R3', R5, R5'.: Reihe
- t₁, t_{S}: Tiefe
- Z₂, Z₃: Detail

## Patentansprüche

1. Fahrzeugluftreifen mit einem Laufstreifen mit zumindest einer in Umfangsrichtung umlaufenden Profilrippe (1, 11, 13) mit einer an der Laufstreifenperipherie liegende Rippenaußenfläche (1a, 11a, 13a), wobei in der Profilrippe (1, 11, 13) von der Rippenaußenfläche (1a, 11a, 13a) ausgehende, in Umfangsrichtung voneinander beabstandete, in Draufsicht jeweils die Form eines Langloches oder eines langgestreckten Rechteckes aufweisende, geschlossene Vertiefungen (3, 3') ausgebildet sind, wobei jede Vertiefung (3, 3') in Draufsicht in Umfangsrichtung oder zu dieser unter einem Winkel von bis zu ± 30° verläuft, eine in radialer Richtung ermittelte maximale Tiefe (t₁) von 80% bis 100% der Profiltiefe und jeweils an der Rippenaußenfläche (1a, 11a, 13a) eine konstante Breite (b₁) und eine Länge (l₁) von mindestens 200% der Breite (b₁) und von höchstens 50,0 mm aufweist,
**dadurch gekennzeichnet,**
**dass** die Breite (b₁) der Vertiefung (3, 3') 2,0 mm bis 4,0 mm beträgt, wobei in der Vertiefung (3, 3') ein stufenförmiger Vorsprung (4) ausgebildet ist, welcher einen nutförmigen, radial inneren Vertiefungsabschnitt (3b) der Vertiefung (3, 3') umläuft.

2. Fahrzeugluftreifen nach Anspruch 1, **dadurch gekennzeichnet, dass** der radial innere Vertiefungsabschnitt (3b) in Draufsicht die Gestalt der Vertiefung (3, 3') in verkleinerter Form aufweist.

3. Fahrzeugluftreifen nach Anspruch 1 oder 2, **dadurch gekennzeichnet, dass** der stufenförmige Vorsprung (4) in radialer Richtung durch eine gegenüber den Rippenaußenfläche (1a, 11a, 13a) abgesetzte Stufenfläche (4a) begrenzt ist, welche, im in Draufsicht senkrecht zu ihrer Erstreckungsrichtung ausgerichteten Querschnitt betrachtet, zumindest abschnittsweise in einer in radialer Richtung ermittelten konstanten Tiefe (ts) verläuft, wobei die Stufenfläche (4a) an ihrem dem radial inneren Vertiefungsabschnitt (3b) abgewandten Ende vorzugsweise eine umlaufende Übergangsrundung (4a') mitumfasst.

4. Fahrzeugluftreifen nach Anspruch 3, **dadurch gekennzeichnet, dass** die Tiefe (ts), in welcher die Stufenfläche (4a) verläuft, 30% bis 70%, insbesondere 45% bis 55%, der Profiltiefe beträgt.

5. Fahrzeugluftreifen nach Anspruch 3 oder 4, **dadurch gekennzeichnet, dass** die Stufenfläche (4a), im in Draufsicht senkrecht zu ihrer Erstreckungsrichtung ausgerichteten Querschnitt betrachtet, eine konstante Breite (b_{S}) von 20% bis 40%, insbesondere von 25% bis 35%, der Breite (b₁) der Vertiefung (3, 3') an der Rippenaußenfläche (1a, 8a, 10a) aufweist, wobei die Breite (b_{S}) der Stufenfläche (4a) inklusive der etwaig vorgesehenen umlaufenden Übergangsrundung (4a') ermittelt ist.

6. Fahrzeugluftreifen nach einem der Ansprüche 3 bis 5, **dadurch gekennzeichnet, dass** die maximale Tiefe (t₁) der Vertiefung (3, 3') um 1,5 mm bis 2,5 mm größer ist als die Tiefe (ts), in welcher die Stufenfläche (4a) verläuft.

7. Fahrzeugluftreifen nach einem der Ansprüche 3 bis 6, **dadurch gekennzeichnet, dass** der stufenförmige Vorsprung (4) zum radial inneren Vertiefungsabschnitt (3b) durch eine zur Stufenfläche (4a) verlaufende seitliche Flanke (4b) begrenzt ist, welche, im Querschnitt betrachtet, zur radialen Richtung unter einem Winkel von 0° bis 3°, insbesondere von bis zu 1,5°, verläuft.

8. Fahrzeugluftreifen nach einem der Ansprüche 3 bis 7, **dadurch gekennzeichnet, dass** der radial äußere Vertiefungsabschnitt (3a) durch eine von der Rippenaußenfläche (1a) ausgehende, zur Stufenfläche (4a) des Vorsprunges (4) verlaufende Wandfläche (8) mitbegrenzt ist, welche, im Querschnitt betrachtet, zur radialen Richtung unter einem Winkel von 0° bis 3°, insbesondere von bis zu 1,5°, verläuft.

9. Fahrzeugluftreifen nach einem der Ansprüche 1 bis 8, **dadurch gekennzeichnet, dass** die Länge (l₁) der Vertiefungen (3, 3') 10,0 mm bis 40,0 mm, bevorzugt 15,0 mm bis 30,0 mm, beträgt
und/oder
dass die Breite (b₁) der Vertiefungen (3, 3') 2,5 mm bis 3,5 mm beträgt.

10. Fahrzeugluftreifen nach einem der Ansprüche 1 bis 9, **dadurch gekennzeichnet, dass** Vertiefungen (3, 3') vorgesehen sind, welche eine Längsschnitt-Symmetrieebene (E₁) und eine Querschnitt-Symmetrieebene (E₂) aufweisen.

11. Fahrzeugluftreifen nach einem der Ansprüche 1 bis 10, **dadurch gekennzeichnet, dass** Vertiefungen (3, 3') vorgesehen sind, welche bezogen auf in Draufsicht in axialer Richtung verlaufende Linien (L), die durch die in Umfangsrichtung am nächsten zueinander befindlichen Enden der Vertiefungen (3, 3') verlaufen, einen in Umfangsrichtung ermittelten Abstand (a₁) aufweisen, welcher 20% bis 70%, insbesondere 30% bis 60%, bevorzugt 40% bis 55%, der arithmetisch gemittelten Länge aus den Längen (l₁) jener beiden Vertiefungen (3), zwischen welchen der Abstand (a₁) ermittelt ist, beträgt.

12. Fahrzeugluftreifen nach einem der Ansprüche 1 bis 11, **dadurch gekennzeichnet, dass** Vertiefungen (3, 3') vorgesehen sind, welche, in Draufsicht betrachtet, in Umfangsrichtung verlaufen sowie vorzugsweise miteinander fluchtend verlaufend in in Umfangsrichtung umlaufenden Reihen (R3, R3') angeordnet sind.

13. Fahrzeugluftreifen nach Anspruch 12, **dadurch gekennzeichnet, dass** in der Profilrippe (1, 11, 13) zumindest zwei Reihen (R3, R3') von Vertiefungen (3, 3') vorgesehen sind.

14. Fahrzeugluftreifen nach einem der Ansprüche 1 bis 13, **dadurch gekennzeichnet, dass** die Profilrippe (1, 11, 13) mit über ihren Umfang verteilten Einschnitten und/oder Rillen (6, 14, 16, 17) versehen ist, welche der Profilrippe (1, 11, 13) Profilblöcke (7, 15, 18) verleihen, in welchen jeweils zumindest eine Vertiefung (3, 3') ausgebildet ist.

15. Fahrzeugluftreifen nach einem der Ansprüche 1 bis 14, **dadurch gekennzeichnet, dass** in der Profilrippe (1) von der Rippenaußenfläche (1a) ausgehende, in Umfangsrichtung voneinander beabstandete, in Draufsicht jeweils die Form eines Langloches oder eines langgestreckten Rechteckes aufweisende, geschlossene, weitere Vertiefungen (5) ausgebildet sind, welche, in Draufsicht betrachtet, zu den Vertiefungen (3, 3') mit den stufenförmigen Vorsprüngen (4) parallel verlaufen, jeweils eine Breite (b₂) von 2,0 mm bis 4,0 mm, insbesondere von 2,5 mm bis 3,5 mm, und eine Länge (l₂) von zumindest 200% ihrer Breite (b₂) und höchstens 50,0 mm, insbesondere von 10,0 mm bis 40,0 mm, besonders bevorzugt von 15,0 mm bis 30,0mm, aufweisen, wobei die Breite (b₂) der weiteren Vertiefungen (5) insbesondere um 0,5 mm bis 1,0 mm geringer ist als die Breite (b₁) der Vertiefungen (3, 3') mit den stufenförmigen Vorsprüngen (4).

## Claims

1. Pneumatic vehicle tyre having a tread with at least one profile rib (1, 11, 13) encircling in the circumferential direction and having a rib outer surface (1a, 11a, 13a) situated on the tread periphery, wherein, in the profile rib (1, 11, 13), starting from the rib outer surface (1a, 11a, 13a), there are formed closed depressions (3, 3') which are spaced apart from one another in the circumferential direction and which, in plan view, each have the shape of an oblong hole or of an elongated rectangle, wherein, as seen in plan view, each depression (3, 3') extends in the circumferential direction or relative thereto at an angle of up to ± 30°, and has a maximum depth (t₁) of 80% to 100% of the profile depth as determined in the radial direction and, in each case on the rib outer surface (1a, 11a, 13a), a constant width (b₁) and a length (l₁) of at least 200% of the width (b₁) and of most 50.0 mm,
**characterized**
**in that** the width (b₁) of the depression (3, 3') is from 2.0 mm to 4.0 mm, wherein the depression (3, 3') has formed therein a step-shaped projection (4) which runs round a groove-shaped, radially inner depression portion (3b) of the depression (3, 3').

2. Pneumatic vehicle tyre according to Claim 1, **characterized in that**, as seen in plan view, the radially inner depression portion (3b) has the form of the depression (3, 3') in a reduced size.

3. Pneumatic vehicle tyre according to Claim 1 or 2, **characterized in that** the step-shaped projection (4) is delimited in the radial direction by a step surface (4a) which is offset in relation to the rib outer surface (1a, 11a, 13a) and, as seen in cross section oriented in plan view perpendicularly to its direction of extent, extends at least in sections at a constant depth (ts) determined in the radial direction, wherein the step surface (4a), at its end facing away from the radially inner depression portion (3b), preferably also comprises an encircling transitional rounded portion (4a').

4. Pneumatic vehicle tyre according to Claim 3, **characterized in that** the depth (ts) at which the step surface (4a) extends is 30% to 70%, in particular 45% to 55%, of the profile depth.

5. Pneumatic vehicle tyre according to Claim 3 or 4, **characterized in that** the step surface (4a), as seen in cross section oriented in plan view perpendicularly to its direction of extent, has a constant width (b_{S}) of 20% to 40%, in particular of 25% to 35%, of the width (b₁) of the depression (3, 3') on the rib outer surface (1a, 8a, 10a), wherein the width (b_{S}) of the step surface (4a) including the possibly provided encircling transitional rounded portion (4a') is determined.

6. Pneumatic vehicle tyre according to any one of Claims 3 to 5, **characterized in that** the maximum depth (t₁) of the depression (3, 3') is 1.5 mm to 2.5 mm larger than the depth (ts) in which the step surface (4a) extends.

7. Pneumatic vehicle tyre according to any one of Claims 3 to 6, **characterized in that** the step-shaped projection (4) is delimited from the radially inner depression portion (3b) by a lateral flank (4b) which extends to the step surface (4a) and, as seen in cross section, extends at an angle of 0° to 3°, in particular of up to 1.5°, with respect to the radial direction.

8. Pneumatic vehicle tyre according to any one of Claims 3 to 7, **characterized in that** the radially outer depression portion (3a) is also delimited by a wall surface (8) which starts from the rib outer surface (1a) and extends to the step surface (4a) of the projection (4) and which, as seen in cross section, extends at an angle of 0° to 3°, in particular of up to 1.5°, with respect to the radial direction.

9. Pneumatic vehicle tyre according to any one of Claims 1 to 8, **characterized in that** the length (l₁) of the depressions (3, 3') is 10.0 mm to 40.0 mm, in particular 15.0 mm to 30.0 mm,
and/or
**in that** the width (b₁) of the depressions (3, 3') is 2.5 mm to 3.5 mm.

10. Pneumatic vehicle tyre according to any one of Claims 1 to 9, **characterized in that** depressions (3, 3') are provided which have a longitudinal-section plane of symmetry (E₁) and a cross-section plane of symmetry (E₂).

11. Pneumatic vehicle tyre according to any one of Claims 1 to 10, **characterized in that** depressions (3, 3') are provided which, with respect to lines (L) extending in the axial direction in plan view and extending through the ends of the depressions (3, 3') closest to one another in the circumferential direction, are at a distance (a₁) which is determined in the circumferential direction and is 20% to 70%, in particular 30% to 60%, preferably 40% to 55%, of the arithmetically averaged length from the lengths (l₁) of those two depressions (3) between which the distance (a₁) is determined.

12. Pneumatic vehicle tyre according to any one of Claims 1 to 11, **characterized in that** depressions (3, 3') are provided which, as seen in plan view, extend in the circumferential direction and, preferably extending in alignment with one another, are arranged in rows (R3, R3') encircling in the circumferential direction.

13. Pneumatic vehicle tyre according to Claim 12, **characterized in that** at least two rows (R3, R3') of depressions (3, 3') are provided in the profile rib (1, 11, 13).

14. Pneumatic vehicle tyre according to any one of Claims 1 to 13, **characterized in that** the profile rib (1, 11, 13) is provided with sipes and/or grooves (6, 14, 16, 17) distributed over its circumference and providing the profile rib (1, 11, 13) with profile blocks (7, 15, 18) in which at least one depression (3, 3') is in each case formed.

15. Pneumatic vehicle tyre according to any one of Claims 1 to 14, **characterized in that**, in the profile rib (1), starting from the rib outer surface (1a), there are formed further closed depressions (5) which are spaced apart from one another in the circumferential direction and which, in plan view, each have the shape of an oblong hole or of an elongated rectangle, and which, as seen in plan view, extend parallel to the depressions (3, 3') with the step-shaped projections (4) and each have a width (b₂) of 2.0 mm to 4.0 mm, in particular of 2.5 mm to 3.5 mm, and a length (l₂) of at least 200% of its width (b₂) and at most 50.0 mm, in particular 10.0 mm to 40.0 mm, particularly preferably 15.0 mm to 30.0 mm, wherein the width (b₂) of the further depressions (5) is in particular 0.5 mm to 1.0 mm smaller than the width (b₁) of the depressions (3, 3') with the step-shaped projections (4).

## Revendications

1. Pneumatique de véhicule avec une bande de roulement avec au moins une nervure de profil (1, 11, 13) circulant dans la direction circonférentielle avec une surface extérieure de nervure (1a, 11a, 13a) située à la périphérie de la bande de roulement, des creux fermés (3, 3') partant de la surface extérieure de nervure (1a, 11a, 13a), espacés les uns des autres dans la direction circonférentielle, présentant respectivement, en vue de dessus, la forme d'un trou oblong ou d'un rectangle allongé, étant réalisés dans la nervure de profil (1, 11, 13), chaque creux (3, 3') s'étendant, en vue de dessus, dans la direction circonférentielle ou selon un angle de jusqu'à ± 30° par rapport à celle-ci, présentant une profondeur maximale (t₁), déterminée dans la direction radiale, de 80 % à 100 % de la profondeur de profil et, respectivement, sur la surface extérieure de nervure (1a, 11a, 13a), une largeur constante (b₁) et une longueur (l₁) d'au moins 200 % la largeur (b₁) et d'au plus 50,0 mm,
**caractérisé en ce que**
la largeur (b₁) du creux (3, 3') est de 2,0 mm à 4,0 mm, une saillie étagée (4) étant réalisée dans le creux (3, 3'), laquelle entoure une section de creux radialement intérieure (3b) en forme de rainure du creux (3, 3').

2. Pneumatique de véhicule selon la revendication 1, **caractérisé en ce que** la section de creux radialement intérieure (3b) présente, en vue de dessus, la forme du creux (3, 3') sous forme réduite.

3. Pneumatique de véhicule selon la revendication 1 ou 2, **caractérisé en ce que** la saillie étagée (4) est délimitée dans la direction radiale par une surface d'étage (4a) décalée par rapport à la surface extérieure de nervure (1a, 11a, 13a), qui, considérée dans la section transversale orientée en vue de dessus perpendiculairement à sa direction d'extension, s'étend au moins par sections à une profondeur constante (ts) déterminée dans la direction radiale, la surface d'étage (4a) entourant de préférence un arrondi de transition circonférentiel (4a') à son extrémité détournée de la section de creux radialement intérieure (3b).

4. Pneumatique de véhicule selon la revendication 3, **caractérisé en ce que** la profondeur (ts) dans laquelle s'étend la surface d'étage (4a) représente de 30 % à 70 %, notamment de 45 % à 55 %, de la profondeur de profil.

5. Pneumatique de véhicule selon la revendication 3 ou 4, **caractérisé en ce que** la surface d'étage (4a), considérée dans la section transversale orientée en vue de dessus perpendiculairement à sa direction d'extension, présente une largeur constante (b_{S}) de 20 % à 40 %, notamment de 25 % à 35 %, de la largeur (b₁) du creux (3, 3') sur la surface extérieure de nervure (1a, 8a, 10a), la largeur (b_{S}) de la surface d'étage (4a) étant déterminée en incluant l'arrondi de transition circonférentiel (4a') éventuellement prévu.

6. Pneumatique de véhicule selon l'une quelconque des revendications 3 à 5, **caractérisé en ce que** la profondeur maximale (t₁) du creux (3, 3') est supérieure de 1,5 mm à 2,5 mm à la profondeur (ts) dans laquelle s'étend la surface d'étage (4a).

7. Pneumatique de véhicule selon l'une quelconque des revendications 3 à 6, **caractérisé en ce que** la saillie étagée (4) est délimitée par rapport à la section de creux radialement intérieure (3b) par un flanc latéral (4b) qui s'étend par rapport à la surface d'étage (4a) qui, considéré dans la section transversale, s'étend selon un angle de 0° à 3°, notamment de jusqu'à 1,5°, par rapport à la direction radiale.

8. Pneumatique de véhicule selon l'une quelconque des revendications 3 à 7, **caractérisé en ce que** la section de creux radialement extérieure (3a) est co-délimitée par une surface de paroi (8) partant de la surface extérieure de nervure (1a), s'étendant vers la surface d'étage (4a) de la saillie (4), laquelle, considérée dans la section transversale, s'étend par rapport à la direction radiale selon un angle de 0° à 3°, notamment de jusqu'à 1,5°.

9. Pneumatique de véhicule selon l'une quelconque des revendications 1 à 8, **caractérisé en ce que** la longueur (l₁) des creux (3, 3') est de 10,0 mm à 40,0 mm, de préférence de 15,0 mm à 30,0 mm,
et/ou
**en ce que** la largeur (b₁) des creux (3, 3') est de 2,5 mm à 3,5 mm.

10. Pneumatique de véhicule selon l'une quelconque des revendications 1 à 9, **caractérisé en ce qu'**il est prévu des creux (3, 3') qui présentent un plan de symétrie de coupe longitudinale (E₁) et un plan de symétrie de coupe transversale (E2).

11. Pneumatique de véhicule selon l'une quelconque des revendications 1 à 10, **caractérisé en ce qu'**il est prévu des creux (3, 3') qui, par rapport à des lignes (L) s'étendant dans la direction axiale en vue de dessus, qui passent par les extrémités des creux (3, 3') les plus proches l'une de l'autre dans la direction circonférentielle, présentent une distance (a₁), déterminée dans la direction circonférentielle, qui représente 20 % à 70 %, notamment 30 % à 60 %, de préférence 40 % à 55 %, de la longueur moyenne arithmétique des longueurs (l₁) des deux creux (3) entre lesquels la distance (a₁) est déterminée.

12. Pneumatique de véhicule selon l'une quelconque des revendications 1 à 11, **caractérisé en ce qu'**il est prévu des creux (3, 3') qui, considérés en vue de dessus, s'étendent dans la direction circonférentielle et sont agencés de préférence en alignement les uns avec les autres dans des rangées (R3, R3') s'étendant dans la direction circonférentielle.

13. Pneumatique de véhicule selon la revendication 12, **caractérisé en ce qu'**au moins deux rangées (R3, R3') de creux (3, 3') sont prévues dans la nervure de profil (1, 11, 13).

14. Pneumatique de véhicule selon l'une quelconque des revendications 1 à 13, **caractérisé en ce que** la nervure de profil (1, 11, 13) est pourvue d'incisions et/ou de rainures (6, 14, 16, 17) réparties sur sa circonférence, qui confèrent à la nervure de profil (1, 11, 13) des blocs de profil (7, 15, 18) dans chacun desquels est réalisé au moins un creux (3, 3').

15. Pneumatique de véhicule selon l'une quelconque des revendications 1 à 14, **caractérisé en ce que** dans la nervure de profil (1) sont réalisés d'autres creux (5) fermés, partant de la surface extérieure de nervure (1a), espacés les uns des autres dans la direction circonférentielle, présentant en vue de dessus respectivement la forme d'un trou oblong ou d'un rectangle allongé, qui, considérés en vue de dessus, s'étendent parallèlement aux creux (3, 3') avec les saillies étagées (4), présentent respectivement une largeur (b₂) de 2,0 mm à 4,0 mm, notamment de 2,5 mm à 3,5 mm, et une longueur (l₂) d'au moins 200 % de leur largeur (b₂) et d'au plus 50,0 mm, notamment de 10,0 mm à 40,0 mm, de manière particulièrement préférée de 15,0 mm à 30,0 mm, la largeur (b₂) des autres creux (5) étant notamment inférieure de 0,5 mm à 1,0 mm à la largeur (b₁) des creux (3, 3') avec les saillies étagées (4).
